# FASCICULE DE BREVET EUROPEEN

(11) **EP 1 241 072 B1**
(45) Date de publication et mention de la délivrance du brevet: **15.06.2005**
(21) Numéro de dépôt: 02290290.2
(22) Date de dépôt: 06.02.2002
(51) Int. Cl.: B62D 1/20, F16D 1/08, F16D 3/38, F16B 37/04

(54) **Assemblage d'un étrier de colonne de direction avec un pignon de direction d'un véhicule automobile**
Verbindung eines Lenksäulenbügels mit einem Kraftfahrzeuglenkungsritzel
Connection of a steering column clamp with a motor vehicle steering pinion

(30) Priorité: 14.03.2001 FR 0103489
(43) Date de publication de la demande: 18.09.2002
(73) Titulaire: NACAM France S.A., F-41100 Vendôme (FR)
(72) Inventeur: Daniel, Philippe, 41100 Villiers sur Loir (FR); Goulay, Pascal, 41100 Vendome (FR); Monteil, Pascal, 41100 Vendome (FR)
(74) Mandataire: Chassagnon, Jean-Alain

(56) Documents cités:
- US-A- 4 900 178

## Description

La présente invention se rapporte au dispositif d'assemblage d'un étrier avec un arbre, et l'invention concerne plus particulièrement le dispositif d'assemblage d'un étrier de colonne de direction avec un pignon de direction d'un véhicule automobile, qui constitue le raccordement de la colonne de direction avec le boîtier de direction.

Il existe de nombreux dispositifs d'assemblage d'une colonne de direction avec le pignon du boîtier de direction d'un véhicule automobile. Lorsque la colonne de direction est munie à sa partie inférieure d'un étrier, il est très fréquent que cet étrier soit équipé d'un boulon, qui se monte transversalement par rapport à l'axe de l'étrier.

Le boulon permet de serrer les deux branches de l'étrier contre l'arbre du pignon de direction, en s'appuyant sur chacune des faces externes des branches dudit étrier. Ces types de dispositifs d'assemblage exigent un environnement dans le véhicule qui permette un accès facile lors du montage et du serrage ; et de plus il est nécessaire de prévoir un outillage spécifique qui permette la présentation correcte de l'écrou lors du montage et de l'engagement de la vis, et qui assure le maintien en rotation de l'écrou lors du serrage. Enfin, ces types de dispositifs d'assemblage ne garantissent par le maintien du serrage lors de l'utilisation du véhicule.

Le but de la présente invention est de proposer un dispositif d'assemblage d'un étrier de colonne de direction avec un pignon de direction, qui évite les inconvénients décrits ci-dessus, et qui permette un montage particulièrement aisé en aveugle dans un encombrement réduit et sans outillage spécifique, tout en garantissant la permanence de l'assemblage.

Selon un mode de réalisation de l'invention, ladite invention se rapporte à un dispositif d'assemblage d'un étrier avec l'extrémité d'un arbre, qui vient s'engager dans ledit étrier. Ledit dispositif d'assemblage comprend un ensemble de serrage et de blocage de l'arbre dans l'étrier, qui est constitué par une vis de serrage coopérant avec un écrou de serrage, suivant un axe de serrage. Dans cette configuration :
- l'écrou de serrage est disposé dans l'une des deux branches dudit étrier ;
- la vis de serrage traverse l'autre branche de l'étrier ;
- l'écrou de serrage est maintenu en place en rotation et en translation suivant l'axe de serrage, par un élément élastique antirotation d'appui de l'écrou de serrage contre la face externe de ladite branche de l'étrier (ces caractéristiques du préambule de la revendication 1 sont connues du brevet US-A-4 900 178); ledit dispositif est caractérisé en ce que:
- l'écrou de serrage est muni d'une excroissance radiale disposée à sa périphérie externe ;
- une butée axiale de prépositionnement est agencée de façon à être rendue solidaire de l'étrier ;
- afin que, lorsque l'excroissance radiale de 30 l'écrou de serrage vient s'appliquer contre la butée axiale de prépositionnement, ledit écrou de serrage soit dans une position retirée en partie le long de son axe pour autoriser l'engagement de l'étrier sur l'extrémité de l'arbre ;
- ledit élément élastique antirotation d'appui étant agencé de manière qu'en fin de serrage de la vis de serrage dans l'écrou de serrage, ladite vis de serrage neutralise la fonction antirotation de l'élément élastique antirotation d'appui, afin de permettre à l'écrou de serrage de s'échapper de la butée axiale de prépositiionnement et de venir bloquer l'étrier sur l'arbre.

Selon un type de réalisation de l'invention, la butée axiale de prépositionnement est intégrée à l'élément élastique antirotation d'appui. Selon un autre type de réalisation de l'invention, la butée axiale de prépositionnement est intégrée à l'étrier.

Dans une structure générale de réalisation de l'invention, l'écrou de serrage comporte :
- un corps cylindrique qui se monte dans un trou agencé dans la branche de l'étrier correspondante ;
- une collerette d'appui contre la face externe de ladite branche de l'étrier ;
- l'excroissance radiale, qui est disposée à la périphérie de la collerette d'appui, et qui vient s'appliquer contre la butée axiale de prépositionnement lors de l'engagement de l'étrier sur l'extrémité de l'arbre ;
- une extrémité cylindrique interne qui prolonge ledit corps cylindrique dans le logement de l'étrier ; ladite extrémité cylindrique interne étant excentrée par rapport audit corps cylindrique de manière que ladite extrémité cylindrique interne excentrée soit disposée du côté opposé à l'arbre par rapport à l'axe de serrage lorsque l'ensemble de serrage et de blocage est en position déverrouillée ;
- de façon qu'en fin de serrage de la vis de serrage dans l'écrou de serrage, et après neutralisation de la fonction antirotation de l'élément élastique antirotation d'appui, ledit écrou de serrage puisse tourner autour de l'axe de serrage, et que l'extrémité cylindrique interne excentrée vienne s'appuyer contre un méplat aménagé sur l'arbre.

Selon une structure générale de réalisation de l'invention, l'élément élastique antirotation d'appui comporte :
- une portion d'accrochage avec l'étrier ;
- une portion antirotation d'appui ;
- une portion souple de liaison raccordant la portion antirotation d'appui à la portion d'accrochage de façon à constituer un seul et même élément.

Dans une structure détaillée dudit élément élastique antirotation d'appui :
- la portion d'accrochage de l'élément élastique antirotation d'appui est conformée suivant une section en U avec deux branches et une embase de raccordement afin d'entourer la partie externe de l'étrier, chacune des deux branches ayant une extrémité recourbée qui s'engage dans un logement aménagé sur la branche correspondante de l'étrier ; ladite embase de raccordement comportant deux languettes élastique d'appui, qui sont opposées l'une à l'autre dans le sens axial ;
- la portion antirotation d'appui de l'élément élastique antirotation d'appui comporte deux languettes antirotation d'appui qui sont reliées l'une à l'autre par une embase d'extrémité ;
- la portion souple de liaison de l'élément élastique antirotation d'appui, comporte deux branches souples qui sont raccordées d'une part à l'embase de raccordement de la portion d'accrochage et d'autre part à la languette antirotation d'appui correspondante.

Avantageusement, la butée axiale de prépositionnement est intégrée à l'une des branches de la portion d'accrochage de l'élément élastique antirotation d'appui.

Dans une structure détaillée de l'écrou de serrage :
- la collerette de l'écrou de serrage comporte :
   . une embase cylindrique d'appui,
   . une portion antirotation qui est le prolongement axial de ladite embase cylindrique d'appui, ladite portion antirotation comporte deux méplats : le premier méplat et le deuxième méplat étant sensiblement parallèles l'un par rapport à l'autre;
   . une extrémité cylindrique externe prolonge axialement la portion antirotation, l'encombrement transversal de ladite extrémité cylindrique externe ne dépassent pas la distance entre le premier méplat et le deuxième méplat.

De manière qu'au repos, c'est-à-dire avant le serrage, les deux languettes antirotation d'appui de la portion antirotation d'appui s'appliquent contre la face externe de l'embase cylindrique d'appui de la collerette ;
- et qu'en fin de serrage, l'extrémité de la vis de serrage repousse l'embase d'extrémité qui entraîne axialement les deux languettes antirotation d'appui pour les dégager de la portion antirotation.

Avantageusement, l'extrémité cylindrique interne excentrée de l'écrou de serrage est munie d'une face inclinée par rapport à l'axe de serrage, afin de permettre l'engagement de l'arbre suivant une direction parallèle aux montants de l'étrier.

De plus, l'extrémité cylindrique interne de l'écrou est excentrée par rapport au corps cylindrique, de manière que ladite extrémité cylindrique interne et ledit corps cylindrique aient une génératrice commune, qui soit disposée du côté opposé à l'arbre par rapport à l'axe de serrage, lorsque l'ensemble de serrage et de blocage est en position déverrouillée.

Une application particulièrement intéressante de l'invention se rapporte à une colonne de direction d'un véhicule automobile, dans laquelle l'étrier est monté sur ladite colonne de direction et l'arbre appartient au pignon du boîtier de direction.

Le dispositif d'assemblage d'un étrier de colonne de direction avec un pignon de direction d'un véhicule automobile selon l'invention présente ainsi l'avantage de permettre un montage avec l'écrou de serrage, qui est maintenu en position ; ce qui évite tout risque de perte et autorise l'assemblage en aveugle dans un encombrement réduit. De plus la position verrouillée avec blocage de l'écrou contre l'arbre garantit le maintien en position de l'étrier sur l'arbre avec le serrage demandé.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue en perspective de l'étrier avec l'écrou de serrage et l'élément élastique antirotation d'appui du dispositif d'assemblage selon l'invention ; l'étrier équipé étant prêt à être monté sur l'arbre ;
- la figure 1A est une vue partielle de la figure A relative à une variante de réalisation ;
- la figure 2 est une vue en perspective analogue à la figure 1 en fin d'assemblage de l'étrier avec l'arbre après blocage et serrage ;
- la figure 3 est une vue suivant III de la figure 1 ;
- la figure 4 est une vue de l'écrou de serrage monté dans l'étrier représenté sur la figure 1 ;
- la figure 5 est une vue suivant V de la figure 4 ;
- la figure 6 est une coupe axiale suivant VI-VI de la figure 4 ;
- la figure 7 est une vue analogue à la figure 3 en phase d'engagement de l'étrier sur l'arbre représenté en coupe transversale ;
- la figure 8 est une vue analogue à la figure 3 en fin d'engagement de l'étrier sur l'arbre ;
- la figure 9 est une coupe transversale d'une vue analogue à la figure 8 avec présentation de la vis de serrage ;
- la figure 10 est une vue en perspective analogue à la figure 1 après engagement de la vis de serrage dans l'étrier ;
- la figure 11 est une vue suivant XI de la figure 10 ;
- la figure 12 est une vue en perspective après dégagement de l'antirotation de l'écrou de serrage par la vis de serrage ;
- la figure 13 est une vue suivant XIII de la figure 12 ;
- la figure 14 est une vue analogue à la figure 13 avec l'écrou de serrage en début d'antirotation par action sur l'arbre ; et
- la figure 15 est une vue suivant XV de la figure 2 après blocage et serrage de l'étrier et de l'arbre.

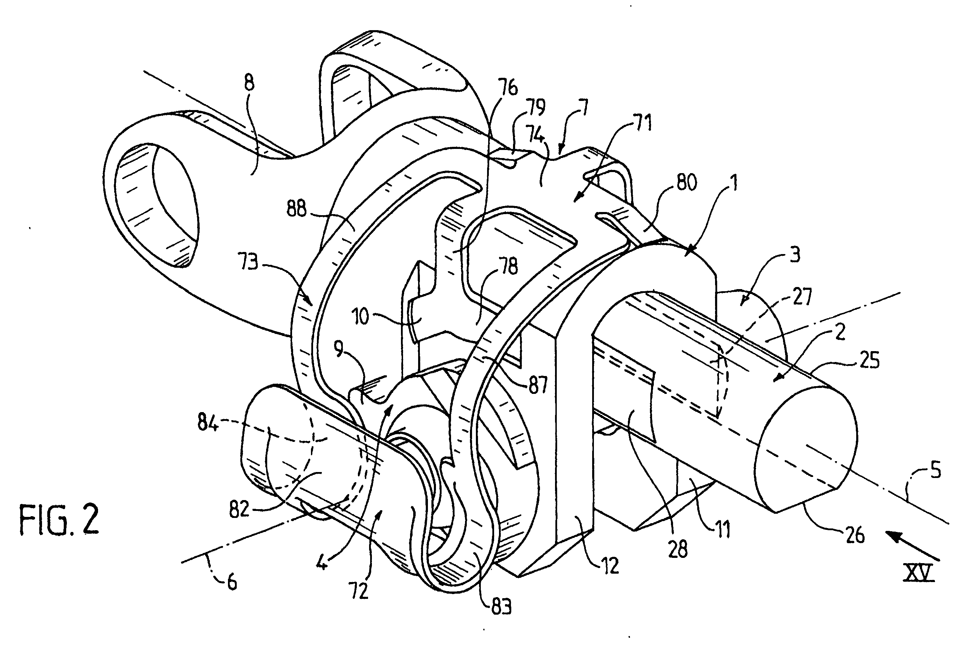

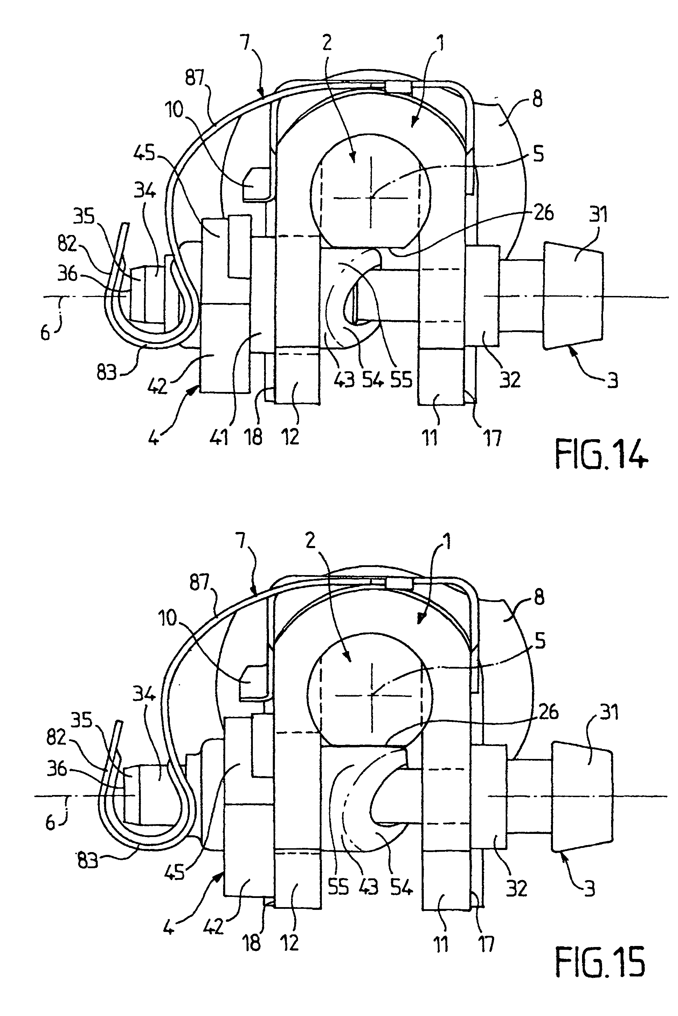

Le dispositif de l'invention se rapporte à un assemblage d'un étrier 1 avec un arbre 2 comme cela est représenté sur les figures 2 et 15. Une application particulièrement intéressante de l'invention se rapporte à une colonne de direction d'un véhicule automobile dans laquelle l'étrier 1 est monté sur ladite colonne de direction, et l'arbre 2 appartient au pignon du boîtier de direction. Selon l'invention, le dispositif d'assemblage, qui raccorde l'étrier 1 de la colonne de direction à l'arbre 2 du pignon de direction, comprend un ensemble de serrage et de blocage dudit arbre 2 dans l'étrier 1. Cet ensemble de serrage et de blocage est essentiellement constitué par une vis de serrage 3, qui coopère avec un écrou de serrage 4 suivant un axe de serrage 6.

L'ensemble de la colonne de direction, qui n'est pas représenté sur les figures, porte à son extrémité inférieure un joint universel 8 du type "cardan". Le joint universel 8 est solidaire d'une part de la colonne de direction, et d'autre part de l'étrier 1.

Le pignon de direction a un axe 5, qui est l'axe de l'arbre 2. L'axe 5 est de ce fait l'axe d'assemblage de l'étrier 1 sur l'arbre 2.

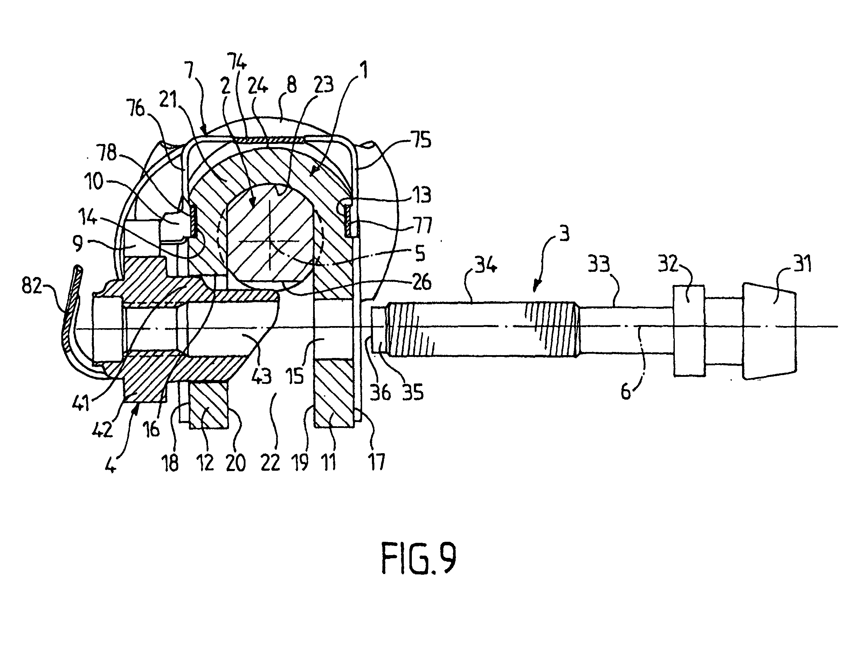

Comme cela est représenté notamment sur la figure 9, l'étrier 1 a une section transversale par rapport à l'axe 5, qui est en forme de U. L'étrier 1 est constitué par deux branches 11 et 12, qui sont sensiblement parallèles l'une par rapport à l'autre. Les branches 11 et 12 sont reliées l'une à l'autre par une portion de raccordement 21 qui a sensiblement une section en demi-couronne circulaire. Les branches 11 et 12 et la portion de raccordement 21 constituent le logement 22 de l'étrier 1. La portion de raccordement 21 a une face externe 24 et une face interne 23, qui constitue le fond du logement 22 de l'étrier 1. La face interne 23 a une courbure sensiblement demi-circulaire et de dimension voisine de la section circulaire de l'arbre 2. Dans la suite de la description, on appellera interne l'élément ou la portion qui est le plus proche du plan passant par l'axe 5 et parallèle aux branches 11 et 12, et on appellera externe l'élément qui est le plus éloigné de ce plan de l'axe 5.

La branche 11 a une face externe 17 et une face interne 19, tandis que la branche 12 a une face externe 18 et une face interne 20. Un logement 13 est aménagé sur la face externe 17, et un logement 14 est aménagé sur la face externe 18. La branche 11 est munie d'un trou 15, qui permet le passage de la vis de serrage 3, et la branche 12 comporte un trou 16 qui constitue le logement et le support de l'écrou de serrage 4. Les trous 15 et 16 sont alignés suivant l'axe de serrage 6, qui est sensiblement perpendiculaire aux branches 11 et 12, et plus précisément aux faces externes 17 et 18 et aux faces internes 19 et 20.

L'arbre 2 a une section circulaire avec une face cylindrique 25 (voir la figure 2). Un premier méplat 27 et un deuxième méplat 28 sont agencés sur l'arbre 2, et ils sont sensiblement parallèles l'un par rapport à l'autre. L'épaisseur de l'arbre 2 entre les deux méplats 27 et 28 est sensiblement voisine et légèrement inférieure à la distance entre les deux faces internes 19 et 20 des branches 11 et 12.

Un troisième méplat 26 est agencé sur l'arbre 2 de manière que ce troisième méplat 26 soit sensiblement perpendiculaire au premier méplat 27 et au deuxième méplat 28.

La vis de serrage 3 a un corps 33 avec, à l'une de ses extrémités, une tête 31 munie d'une collerette 32.

A l'autre extrémité, le corps 33 est équipé d'une portion filetée 34 avec un embout 35 muni d'une face transversale 36.

Le trou 15, qui est aménagé dans la branche 11, est dimensionné de manière à laisser passer librement la portion filetée 34 de la vis de serrage 3, dont la collerette 32 vient s'appliquer contre fa face externe 17 de la branche 11.

L'écrou de serrage 4 comporte un corps cylindrique 41 qui se monte dans le trou 16 de la branche 12 de l'étrier 1. Le trou 16 est dimensionné de façon que le corps cylindrique 41 s'ajuste correctement dans ledit trou 16 de la branche 12 qui supporte l'écrou de serrage 4. Le corps cylindrique 41 se prolonge par une extrémité cylindrique interne 43 qui pénètre dans le logement 22 de l'étrier 1.

Le corps cylindrique 41 se prolonge à l'extérieur de la branche 12 par une collerette d'appui 42, qui s'applique contre la face externe 18 de ladite branche 12.

Ainsi dans le dispositif d'assemblage de l'invention, l'écrou de serrage 4 est disposé dans l'une des deux branches 12 de l'étrier 1 ; et la vis de serrage 3 traverse l'autre branche 11 de l'étrier 1.

Selon une des caractéristiques de l'invention, l'écrou de serrage 4 est maintenu en place en rotation et en translation suivant l'axe de serrage 6, lorsque l'ensemble de serrage et de blocage est en position déverrouillée. Comme cela est représenté sur la figure 9, le maintien en place en rotation et en translation est assuré par un élément élastique antirotation d'appui 7 de l'écrou de serrage 4.

Selon une autre caractéristique de l'invention, l'écrou de serrage 4 est muni d'une excroissance radiale 9 qui est disposée à sa périphérie externe. De plus, une butée axiale de prépositionnement 10 est agencée de façon à être rendue solidaire de l'étrier 1.

L'excroissance radiale 9 et la butée axiale de prépositionnement 10 sont conçus et disposés de manière que, lorsque l'excroissance radiale 9 de l'écrou de serrage 4 vient s'appliquer contre la butée axiale de prépositionnement 10, ledit écrou de serrage 4 soit dans une position retirée en partie le long de son axe 6 pour autoriser l'engagement de l'étrier 1 sur l'extrémité de l'arbre 2.

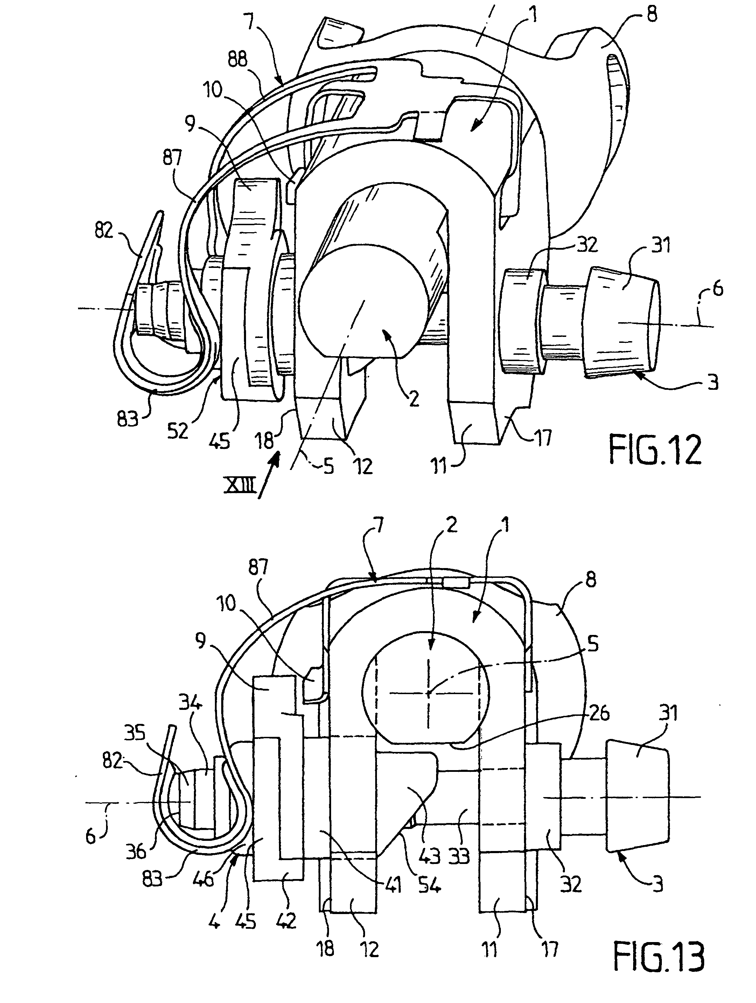

L'élément élastique antirotation d'appui 7 est agencé de manière qu'en fin de serrage de la vis de serrage 3 dans l'écrou de serrage 4, ladite vis de serrage 3 neutralise la fonction antirotation de l'élément élastique antirotation d'appui 7 (voir figures 12 et 13), afin de permettre à l'écrou de serrage 4 de s'échapper de la butée axiale de prépositionnement 10 et de venir bloquer l'étrier 1 sur l'arbre 2, comme cela est représenté sur les figures 14, 2 et 15.

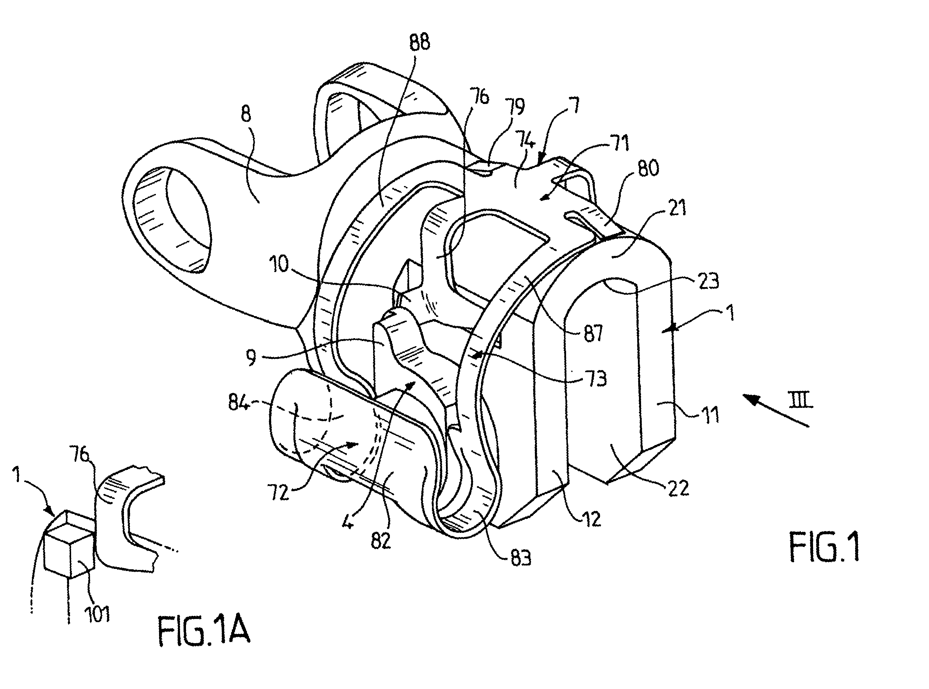

Selon un type de réalisation de l'invention représenté sur la figure 1A, la butée axiale de prépositionnement référencée 101 est intégrée à l'étrier 1.

Selon un autre type de réalisation de l'invention représenté sur toutes les autres figures, la butée axiale de prépositionnement 10 est intégrée à l'élément élastique antirotation d'appui 7.

L'élément élastique antirotation d'appui 7, qui est représenté sur les différentes figures, comporte:
- une portion d'accrochage 71 avec l'étrier 1 ;
- une portion antirotation d'appui 72 ;
- une portion souple de liaison 73 raccordant la portion antirotation d'appui 72 à la portion d'accrochage 71 de façon à constituer un seul et même élément.

Comme cela est représenté notamment sur les figures 1, 2 et 9, la portion d'accrochage 71 de l'élément élastique antirotation d'appui 7 est conformée suivant une section en U avec deux branches 75, 76 et une embase de raccordement 74 afin d'entourer la partie externe de l'étrier. Chacune des deux branches 75, 76 a une extrémité recourbée 77, 78 qui s'engage dans un logement 13, 14 aménagé sur la branche correspondante 11, 12 de l'étrier 1. L'embrase de raccordement 74 comporte deux languettes élastiques d'appui 79 et 80, qui sont opposées l'une à l'autre dans le sens axial.

La portion antirotation d'appui 72 de l'élément élastique antirotation d'appui 7 comporte deux languettes antirotation d'appui 83 et 84, qui sont reliées l'une à l'autre par une embase d'extrémité 82.

La portion souple de liaison 73 de l'élément élastique antirotation d'appui comporte deux branches souples 87 et 88 qui sont raccordées d'une part à l'embase de raccordement 74 de la portion d'accrochage 71 et d'autre part à la languette antirotation d'appui correspondante 83, 84.

La butée axiale de prépositionnement 10 est intégrée à la branche 76 de la portion d'accrochage 71 de l'élément élastique antirotation d'appui 7.

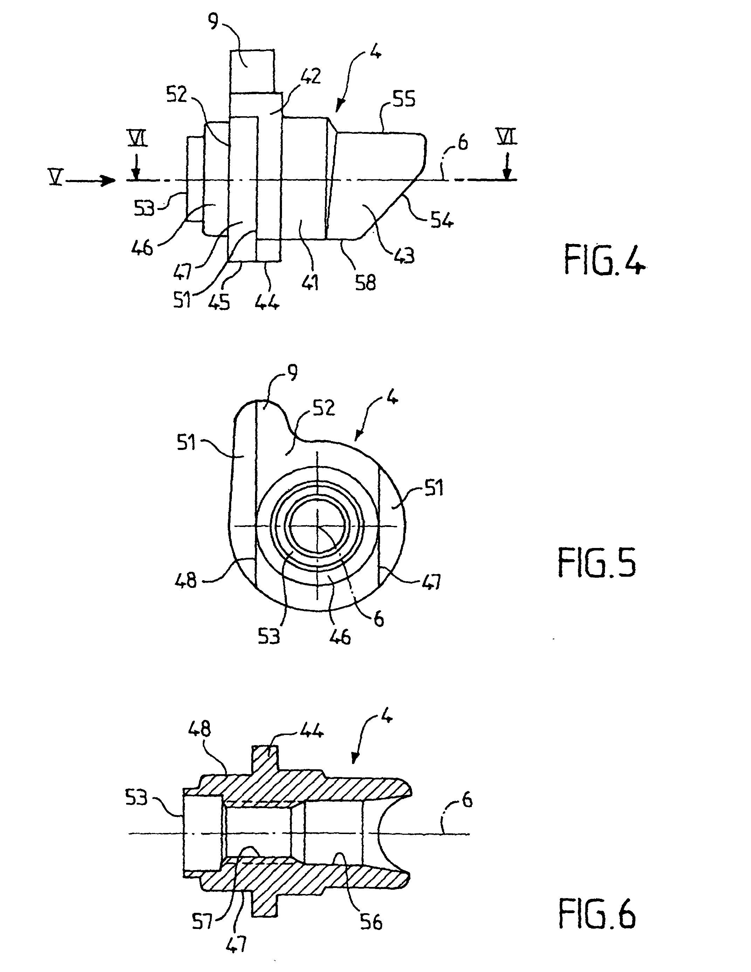

La structure détaillée de l'écrou de serrage 4 est particulièrement mis en évidence sur les figures 4, 5 et 6. Dans cette structure, l'écrou de serrage 4 comporte :
- le corps cylindrique 41 qui se monte dans le trou 16 agencé dans la branche correspondante 12 de l'étrier 1 ;
- la collerette d'appui 42 contre la face externe 18 de ladite branche 12 de l'étrier 1 ;
- l'excroissance radiale 9, qui est disposée à la périphérie de la collerette d'appui 42, et qui vient s'appliquer contre la butée axiale de prépositionnement 10 lors de l'engagement de l'étrier 1 sur l'extrémité de l'arbre 2 ;
- et l'extrémité cylindrique interne 43 qui prolonge ledit corps cylindrique 41 dans le logement 22 de l'étrier 1.

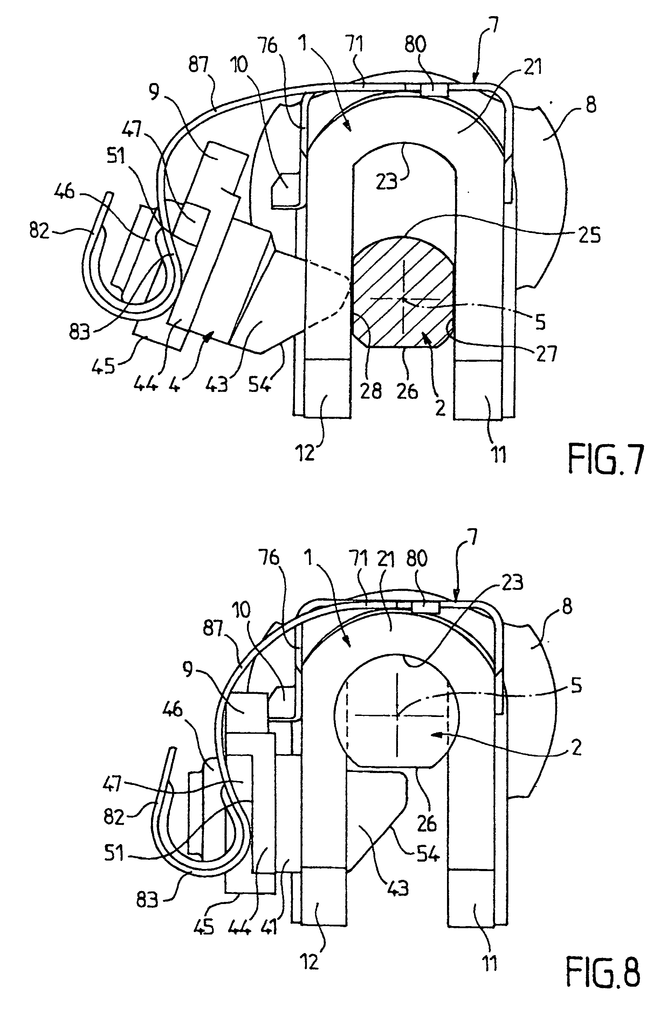

L'écrou de serrage 4 a un trou fileté 57 qui coopère, avec la portion filetée 34. De plus un trou de passage 56 permet à la vis de serrage 3 de s'engager dans l'écrou de serrage 4. L'extrémité cylindrique interne 43 a une surface cylindrique 55 qui est excentrée par rapport audit corps cylindrique 41, de manière que ladite extrémité cylindrique interne excentrée 43 soit disposée du côté opposé à l'arbre 2 par rapport à l'axe de serrage 6, lorsque l'ensemble de serrage et de blocage est en position déverrouillée (voir figures 8 et 9).

Cette excentricité est agencée de façon qu'en fin de serrage de la vis de serrage 3 dans l'écrou de serrage 4, et après neutralisation de la fonction antirotation de l'élément élastique antirotation d'appui 7, ledit écrou de serrage 4 puisse tourner autour de l'axe de serrage 6, et que l'extrémité cylindrique interne excentrée 43 vienne s'appuyer contre le méplat 26 aménagé sur l'arbre 2 (voir figures 14 et 15).

Dans cette structure, la collerette 42 de l'écrou de serrage 4 comporte :
- une embase cylindrique d'appui 44,
- une portion antirotation 45,
- et une extrémité cylindrique externe 46.

La portion antirotation 45 est le prolongement axial de ladite embase cylindrique d'appui 44. Ladite portion antirotation 45 comporte deux méplats 47, 48 : le premier méplat 47 et le deuxième méplat 48 étant sensiblement parallèles l'un par rapport à l'autre.

L'extrémité cylindrique externe 46 prolonge axialement la portion antirotation 45, et l'encombrement transversal de ladite extrémité cylindrique externe 46 ne dépasse pas la distance entre le premier méplat 47 et le deuxième méplat 48. L'embase cylindrique d'appui 44 a une face externe 51 contre laquelle viennent s'appliquer les deux languettes antirotation d'appui 83 et 84. La portion antirotation 45 a une face externe 52, qui doit être dégagée en fin de serrage par la portion antirotation d'appui 72.

Ceci est agencé de manière qu'au repos, c'est-à-dire avant le serrage, les deux languettes antirotation d'appui 83, 84 de la portion antirotation d'appui 72 s'appliquent contre la face externe 51 de l'embase cylindrique d'appui 44 de la collerette 42.

Ceci est agencé également pour qu'en fin de serrage, la face transversale 36 de l'extrémité 35 de la vis de serrage 3 repousse l'embrase d'extrémité 82 qui entraîne axialement les deux languettes antirotation 83, 84 pour les dégager de la face externe 52 de la portion antirotation 45 (voir figures 12 et 13).

Dans le mode de réalisation représenté sur les différentes figures, l'extrémité cylindrique interne 43 de l'écrou 4 est excentrée par rapport au corps cylindrique 41, de manière que ladite extrémité cylindrique interne 43 et ledit corps cylindrique 41 aient une génératrice commune 58, qui soit disposée du côté opposé à l'arbre 2 par rapport à l'axe de serrage 6, lorsque l'ensemble de serrage et de blocage est en position déverrouillée (voir figure 9).

L'extrémité cylindrique interne excentrée 43 de l'écrou de serrage 4 est munie d'une face inclinée 54 par rapport à l'axe de serrage 6 afin de permettre l'engagement de l'arbre 2 suivant une direction parallèle aux montants 11, 12 de l'étrier 1.

Ainsi pour effectuer le montage de l'étrier 1 sur l'arbre 2, il faut tout d'abord disposer sur l'étrier 1 l'élément élastique antirotation d'appui 7 équipé de l'écrou de serrage 4, qui s'engage dans le trou 16 de la branche 12 de l'étrier 1. Durant cette opération, l'écrou de serrage 4 est maintenu en position par l'intermédiaire de ses méplats 47 et 48, qui reçoivent les languettes antirotation d'appui 83 et 84 s'appliquant contre la face externe 51 de l'embase cylindrique d'appui 44.

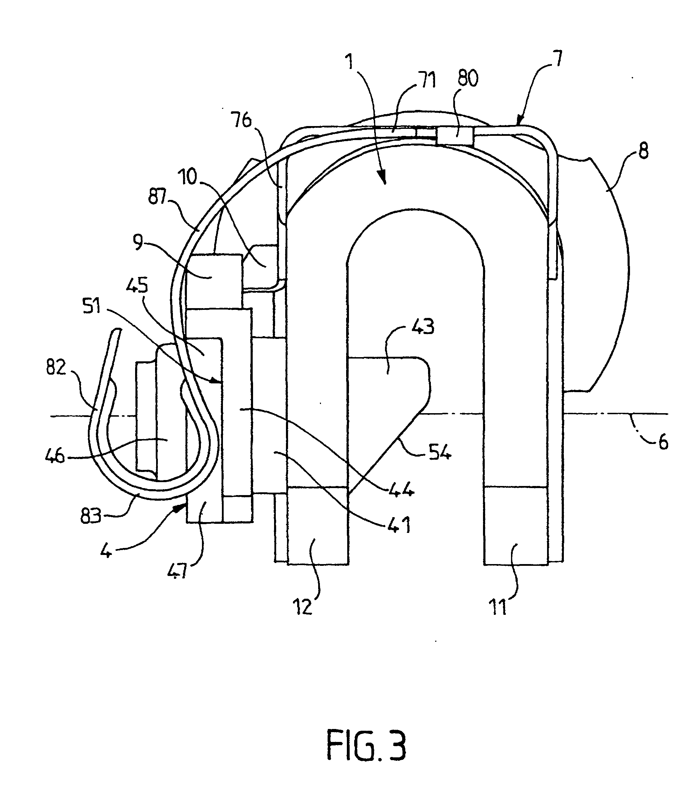

L'écrou s'engage dans l'étrier jusqu'à ce que l'excroissance radiale 9 vienne s'appliquer contre la butée axiale de prépositionnement 10 ou 101, comme cela est représenté sur les figures 1 et 3.

L'étrier 1 ainsi équipé est engagé sur l'arbre 2, comme cela est représenté sur la figure 7. L'arbre 2 repousse la face inclinée 54 de l'extrémité cylindrique interne excentrée 43. L'écrou de serrage 4 se retire vers l'extérieur grâce à la souplesse de l'élément élastique antirotation d'appui 7, et laisse passer l'arbre 2 qui vient s'appuyer contre la face interne 23 de la portion de raccordement 21. L'écrou de serrage 4 revient alors à la position précédente en appui contre la butée axiale de prépositionnement 10, comme cela est représenté sur la figure 8. La vis de serrage 3 est ensuite présentée suivant l'axe de serrage 6 comme cela est représenté sur la figure 9.

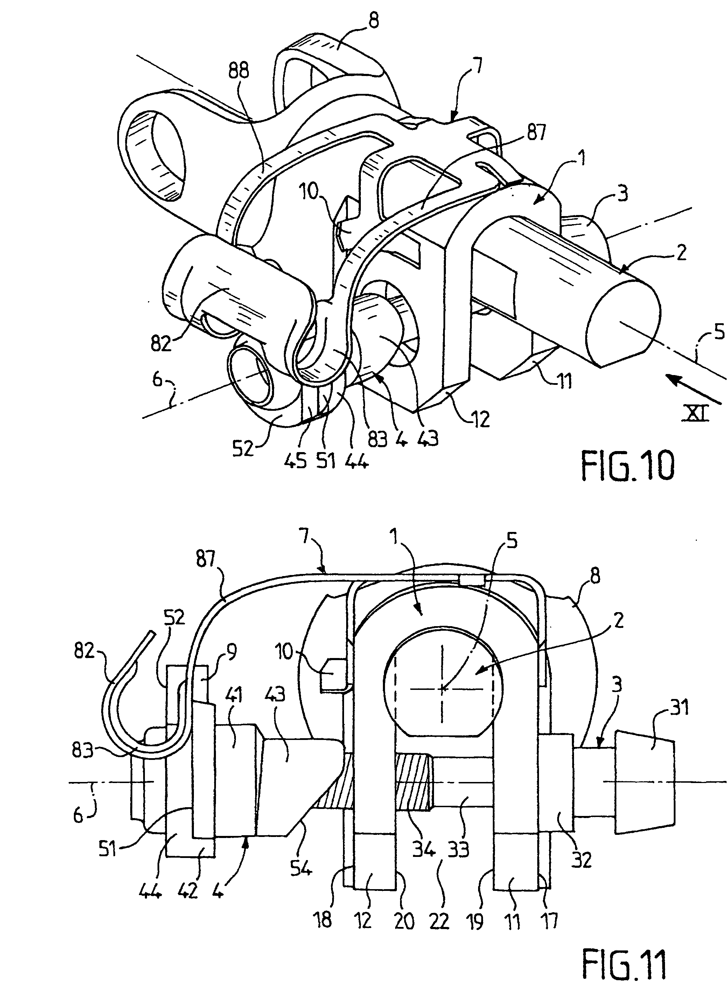

La vis de serrage 4 est alors engagée dans les branches 11 et 12 et dans le trou de passage 56 de l'écrou de serrage 4 jusqu'à ce que la collerette 32 s'applique contre la face externe 17. Durant cette opération, la vis de serrage 3 repousse l'écrou de serrage en dehors de l'étrier 1, comme cela est représenté sur les figures 10 et 11.

La vis de serrage 3 se visse ensuite dans le trou fileté 57 de l'écrou de serrage 4, qui se rapproche de la branche 12 jusqu'à ce que la languette antirotation d'appui 83 et 84 s'échappent de la portion antirotation 45 de l'écrou de serrage 4 (voir figures 12 et 13). Ce dégagement est réalisé grâce à l'action de la face transversale 36 de l'extrémité 35 de la vis de serrage 3, qui repousse l'embase d'extrémité 82 entraînant ainsi les languettes antirotation d'appui 83 et 84.

La vis de serrage 4 entraîne alors en rotation l'écrou de serrage 4 avec son extrémité interne 43, qui vient s'appliquer contre le méplat 26 de l'arbre 2 ; et l'écrou de serrage 4 en tournant, a dégagé son excroissance radiale 9 de la butée de prépositionnement 10, comme cela est représenté sur la figure 14.

L'écrou de serrage 4 étant immobilisé en rotation, la vis de serrage 3 en tournant, rapproche l'écrou de serrage 4 afin d'appliquer sa collerette 42 contre la face externe 18. La vis de serrage 3 est enfin tournée jusqu'à ce que le serrage demandé soit effectué comme cela est représenté sur les figures 2 et 15.

## Revendications

1. Dispositif d'assemblage d'un étrier (1) avec l'extrémité d'un arbre (2) ayant un axe (5) qui vient s'engager dans ledit étrier (1), ledit dispositif d'assemblage comprenant un ensemble de serrage et de blocage de l'arbre (2) dans l'étrier (1), qui est constitué par une vis de serrage (3) coopérant avec un écrou de serrage (4), suivant un axe de serrage (6) :
- l'écrou de serrage (4) est disposé dans l'une des deux branches (12) dudit étrier (1) ;
- la vis de serrage (3) traverse l'autre branche (11) de l'étrier (1) ;
- l'écrou de serrage (4) est maintenu en place en rotation et en translation suivant l'axe de serrage (6), par un élément élastique antirotation d'appui (7) de l'écrou de serrage (4) contre la face externe (18) de ladite branche (12) de l'étrier (1), **caractérisé en ce que** :
- l'écrou de serrage (4) est muni d'une excroissance radiale (9) disposée à sa périphérie externe ;
- une butée axiale de prépositionnement (10, 101) est agencée de façon à être rendue solidaire de l'étrier (1) ;
- afin que, lorsque l'excroissance radiale (9) de l'écrou de serrage (4) vient s'appliquer contre la butée axiale de prépositionnement (10), ledit écrou de serrage (4) soit dans une position retirée en partie le long de son axe (6) pour autoriser l'engagement de l'étrier (1) sur l'extrémité de l'arbre (2) ;
- ledit élément élastique antirotation d'appui (7) étant agencé de manière qu'en fin de serrage de la vis de serrage (3) dans l'écrou de serrage (4), ladite vis de serrage (3) neutralise la fonction antirotation de l'élément élastique antirotation d'appui (7), afin de permettre à l'écrou de serrage (4) de s'échapper de la butée axiale de prépositionnement (10, 101) et de venir bloquer l'étrier (1) sur l'arbre (2).

2. Dispositif d'assemblage conforme à la revendication 1, **caractérisé en ce que** la butée axiale de prépositionnement (10) est intégrée à l'élément élastique antirotation d'appui (7).

3. Dispositif d'assemblage conforme à la revendication 1, **caractérisé en ce que** la butée axiale de prépositionnement 101 est intégrée à l'étrier (1).

4. Dispositif d'assemblage conforme à la revendication 1, **caractérisé en ce que** l'écrou de serrage (4) comporte :
- un corps cylindrique (41) qui se monte dans un trou (16) agencé dans la branche correspondante (12) de l'étrier (1) ;
- une collerette d'appui (42) contre la face externe (18) de ladite branche (12) de l'étrier (1) ;
- l'excroissance radiale (9), qui est disposée à la périphérie de la collerette d'appui (42), et qui vient s'appliquer contre la butée axiale de prépositionnement (10) lors de l'engagement de l'étrier (1) sur l'extrémité de l'arbre (2) ;
- une extrémité cylindrique interne (43) qui prolonge ledit corps cylindrique (41) dans le logement (22) de l'étrier (1) ; ladite extrémité cylindrique interne (43) étant excentrée par rapport audit corps cylindrique (41) de manière que ladite extrémité cylindrique interne excentrée (43) soit disposée du côté opposé à l'arbre (2) par rapport à l'axe de serrage (6) lorsque l'ensemble de serrage et de blocage est en position déverrouillée ;
- de façon qu'en fin de serrage de la vis de serrage (3) dans l'écrou de serrage (4), et après neutralisation de la fonction antirotation de l'élément élastique antirotation d'appui (7), ledit écrou de serrage (4) puisse tourner autour de l'axe de serrage (6), et que l'extrémité cylindrique interne excentrée (43) vienne s'appuyer contre un méplat (26) aménagé sur l'arbre (2).

5. Dispositif d'assemblage conforme à l'une quelconque des revendications précédentes, **caractérisé en ce que** l'élément élastique antirotation d'appui (7) comporte :
- une portion d'accrochage (71) avec l'étrier (1) ;
- une portion antirotation d'appui (72) ;
- une portion souple de liaison (73) raccordant la portion antirotation d'appui (72) à la portion d'accrochage (71) de façon à constituer un seul et même élément.

6. Dispositif d'assemblage conforme à la revendication 5, **caractérisé en ce que** :
- la portion d'accrochage (71) de l'élément élastique antirotation d'appui (7) est conformée suivant une section en U avec deux branches (75, 76) et une embase de raccordement (74) afin d'entourer la partie externe de l'étrier, chacune des deux branches (75, 76) ayant une extrémité recourbée (77, 78) qui s'engage dans un logement (13, 14) aménagé sur la branche correspondante (11, 12) de l'étrier (1) ; ladite embase de raccordement (74) comportant deux languettes élastique d'appui (79, 80), qui sont opposées l'une à l'autre dans le sens axial ;
- la portion antirotation d'appui (72) de l'élément élastique antirotation d'appui (7) comporte deux languettes antirotation d'appui (83, 84) qui sont reliées l'une à l'autre par une embase d'extrémité (82) ;
- la portion souple de liaison (73) de l'élément élastique antirotation d'appui (7), comporte deux branches souples (87, 88) qui sont raccordées d'une part à l'embase de raccordement (74) de la portion d'accrochage (71) et d'autre part à la languette antirotation d'appui correspondante (83, 84).

7. Dispositif d'assemblage conforme à la revendication 6, **caractérisé en ce que** la butée axiale de prépositionnement (10) est intégrée à la branche (76) de la portion d'accrochage (71) de l'élément élastique antirotation d'appui (7).

8. Dispositif d'assemblage conforme à la revendication 6 ou 7, **caractérisé en ce que** :
- la collerette (42) de l'écrou de serrage (4) comporte :
. une embase cylindrique d'appui (44),
. une portion antirotation (45) qui est le prolongement axial de ladite embase cylindrique d'appui (44), ladite portion antirotation (45) comporte deux méplats (47, 48) : le premier méplat (47) et le deuxième méplat (48) étant sensiblement parallèles l'un par rapport à l'autre ;
. une extrémité cylindrique externe (46) prolonge axialement la portion antirotation (45), l'encombrement transversal de ladite extrémité cylindrique externe (46) ne dépassent pas la distance entre le premier méplat et le deuxième méplat (47, 48),
- de manière qu'au repos, c'est-à-dire avant le serrage, les deux languettes antirotation d'appui (83, 84) de la portion antirotation d'appui (72) s'appliquent contre la face externe (51) de l'embase cylindrique d'appui (44) de la collerette (42) ;
- et qu'en fin de serrage, l'extrémité (35) de la vis de serrage (3) repousse l'embase d'extrémité (82) qui entraîne axialement les deux languettes antirotation d'appui (83, 84) pour les dégager de la portion antirotation (45).

9. Dispositif d'assemblage conforme à l'une quelconque des revendications précédentes, **caractérisé en ce que** l'extrémité cylindrique interne excentrée (43) de l'écrou de serrage (4) est munie d'une face inclinée (54) par rapport à l'axe de serrage (6), afin de permettre l'engagement de l'arbre (2) suivant une direction parallèle aux montants (11, 12) de l'étrier (1).

10. Dispositif d'assemblage conforme à l'une quelconque des revendications précédentes, **caractérisé en ce que** l'extrémité cylindrique interne (43) de l'écrou (4) est excentrée par rapport au corps cylindrique (41), de manière que ladite extrémité cylindrique interne (43) et ledit corps cylindrique (41) aient une génératrice commune (58), qui soit disposée du côté opposé à l'arbre (2) par rapport à l'axe de serrage (6), lorsque l'ensemble de serrage et de blocage est en position déverrouillée.

11. Dispositif d'assemblage conforme à l'une quelconque des revendications précédentes, **caractérisé en ce qu'**il s'applique à une colonne de direction d'un véhicule automobile, dans lequel l'étrier (1) est monté sur ladite colonne de direction et l'arbre (2) appartient au pignon du boîtier de direction.

## Patentansprüche

1. Vorrichtung zur Verbindung einer Klemme (1) mit dem Ende einer Welle (2), die eine Achse (5) aufweist, die in die genannte Klemme (1) eingreift, wobei die Verbindungsvorrichtung eine Einheit zum Einspannen und zum Arretieren der Welle (2) in der Klemme (1) aufweist, die aus einer Feststellschraube (3) besteht, die mit einer Feststellmutter (4) entlang einer Feststellachse (6) zusammenwirkt:
- die Feststellmutter (4) ist an einem der beiden Arme (12) der genannten Klemme (1) angeordnet;
- die Feststellschraube (3) durchläuft den anderen Arm (11) der Klemme (1);
- die Feststellmutter (4) wird entlang der Feststellachse (6) in Bezug auf Drehung und Verschiebung an ihrem Platz gehalten durch ein elastisches Gegendreh-Stützelement (7) der Feststellschraube (4) an der Außenfläche (18) des genannten Arms (12) der Klemme (1), **dadurch gekennzeichnet, dass**:
- die Feststellmutter (4) eine radiale Ausstülpung (9) aufweist, die an ihrem äußeren Rand angeordnet ist;
- ein Axial-Anschlaglager (10, 101) derart angeordnet ist, dass es fest mit der Klemme (1) verbunden ist;
- damit sich die genannte Feststellmutter (4), wenn die radiale Ausstülpung (9) der Feststellmutter (4) an dem Axial-Anschlaglager (10) aufliegt, in einer teilweise zurückgezogenen Position entlang ihrer Achse (6) befindet, um das Eingreifen der Klemme (1) in das Ende der Welle (2) zu ermöglichen;
- das genannte elastische Gegendreh-Stützelement (7) derart angeordnet ist, dass die Feststellschraube (3) am Ende der Einspannung der Feststellschraube (3) in der Feststellmutter (4) die Gegendrehfunktion des elastischen Gegendreh-Stützelements (7) neutralisiert, um der Feststellmutter (4) zu ermöglichen, sich dem Axial-Anschlaglager (10, 101) zu entziehen und die Klemme (1) auf der Welle (2) zu arretieren.

2. Verbindungsvorrichtung nach Anspruch 1, **dadurch gekennzeichnet, dass** das Axial-Anschlaglager (10) in das elastische Gegendreh-Stützelement (7) integriert ist.

3. Verbindungsvorrichtung nach Anspruch 1, **dadurch gekennzeichnet, dass** das Axial-Anschlaglager 101 in die Klemme (1) integriert ist.

4. Verbindungsvorrichtung nach Anspruch 1, **dadurch gekennzeichnet, dass** die Feststellmutter (4) aufweist:
- einen zylindrischen Körper (41), der in einer Öffnung (16) angeordnet wird, die sich in dem entsprechenden Arm (12) der Klemme (1) befindet;
- einen Stützring (42) an der Außenfläche (18) des genannten Arms (12) der Klemme (1);
- eine radiale Ausstülpung (9), die am Rand des Stützrings (42) angeordnet ist und die beim Eingreifen der Klemme (1) in das Ende der Welle (2) am Axial-Anschlaglager (10) aufliegt;
- ein inneres zylindrisches Ende (43), das den genannten zylindrischen Körper (41) im Aufnahmeraum (22) der Klemme (1) verlängert; wobei das genannte interne zylindrische Ende (43) in Bezug auf den genannten zylindrischen Körper (41) derart exzentrisch verlagert ist, dass das genannte exzentrische innere zylindrische Ende (43) auf der in Bezug auf die Feststellachse (6) gegenüberliegenden Seite der Welle (2) angeordnet ist, wenn sich die Einheit zum Einspannen und Arretieren in einer entsicherten Position befindet;
- derart, dass am Ende der Einspannung der Feststellschraube (3) in der Feststellmutter (4) und nach der Neutralisation der Gegendrehfunktion des elastischen Gegendreh-Stützelements (7) die genannte Feststellmutter (4) um die Feststellachse (6) drehbar ist und dass das exzentrische innere zylindrische Ende (43) an einer Flachstelle (26), die auf der Welle angeordnet (2) ist, aufliegt.

5. Verbindungsvorrichtung nach einem der vorhergehenden Ansprüche, **dadurch gekennzeichnet, dass** das elastische Gegendreh-Stützelement (7) aufweist:
- einen Einrastabschnitt (71) für die Klemme (1);
- einen Gegendreh-Stützabschnitt (72);
- einen flexiblen Verbindungsabschnitt (73), der den Gegendreh-Stützabschnitt (72) mit dem Einrastabschnitt (71) derart verbindet, dass es ein und dasselbe Element darstellt.

6. Verbindungsvorrichtung nach Anspruch 5, **dadurch gekennzeichnet, dass**:
- der Einrastabschnitt (71) des elastischen Gegendreh-Stützelements (7) an einen U-förmigen Abschnitt mit zwei Armen (75, 76) und einen Verbindungssockel (74) angepasst wird, so dass er den äußeren Abschnitt der Klemme umschließt, wobei jeder der beiden Arme (75, 76) ein gebogenes Ende (77, 78) aufweist, das in einen Aufnahmeraum (13, 14) eingreift, der auf dem entsprechenden Arm (11, 12) der Klemme (1) angeordnet ist; wobei der genannte Verbindungssockel (74) zwei elastische Stützlaschen (79, 80) aufweist, die in axialer Richtung einander gegenüber liegen;
- der Gegendreh-Stützabschnitt (72) des elastischen Gegendreh-Stützelements (7) zwei Gegendreh-Stützlaschen (83, 84) aufweist, die durch einen Endsockel (82) miteinander verbunden sind;
- der flexible Verbindungsabschnitt (73) des elastischen Gegendreh-Stützelements (7) zwei flexible Arme (87, 88) aufweist, die einerseits mit dem Verbindungssockel (74) des Einrastabschnitts (71) und andererseits mit der entsprechenden Gegendreh-Stützlasche (83, 84) verbunden sind.

7. Verbindungsvorrichtung nach Anspruch 6, **dadurch gekennzeichnet, dass** das Axial-Anschlaglager (10) in den Arm (76) des Einrastabschnitts (71) des elastischen Gegendreh-Stützelements (7) integriert ist.

8. Verbindungsvorrichtung nach Anspruch 6 oder 7, **dadurch gekennzeichnet, dass**:
- der Ring (42) der Feststellmutter (4) aufweist:
· einen zylindrischen Stützsockel (44),
· einen Gegendrehabschnitt (45), der die axiale Verlängerung des genannten zylindrischen Stützsockels (44) ist, wobei der genannte Gegendrehabschnitt (45) zwei Flachstellen (47, 48) aufweist: die erste Flachstelle (47) und die zweite Flachstelle (48), die genau parallel zueinander verlaufen;
· ein äußeres zylindrisches Ende (46), das den Gegendrehabschnitt (45) axial verlängert, wobei die Querabmessungen des genannten äußeren zylindrischen Endes (46) den Abstand zwischen der ersten Flachstelle und der zweiten Flachstelle (47, 48) nicht überschreiten,
- derart, dass im Ruhezustand, das heißt vor der Einspannung, die beiden Gegendreh-Stützlaschen (83, 84) des Gegendreh-Stützabschnitts (72) an der Außenfläche (51) des zylindrischen Stützsockels (44) des Rings (42) aufliegen;
- und dass am Ende der Einspannung das Ende (35) der Feststellschraube (3) den Endsockel (82) zurückschiebt, der axial die beiden Gegendreh-Stützlaschen (83, 84) mitnimmt, um sie vom Gegendrehabschnitt (45) zu lösen.

9. Verbindungsvorrichtung nach einem der vorhergehenden Ansprüche, **dadurch gekennzeichnet, dass** das exzentrische innere zylindrische Ende (43) der Feststellmutter (4) eine in Bezug auf die Feststellachse (6) geneigte Fläche (54) aufweist, um das Eingreifen der Welle (2) in einer in Bezug auf die Stützen (11, 12) der Klemme (1) parallel verlaufenden Richtung zu ermöglichen.

10. Verbindungsvorrichtung nach einem der vorhergehenden Ansprüche, **dadurch gekennzeichnet, dass** das innere zylindrische Ende (43) der Mutter (4) in Bezug auf den zylindrischen Körper (41) exzentrisch ist, und zwar derart, dass das genannte innere zylindrische Ende (43) und der genannte zylindrische Körper (41) eine gemeinsame Mantellinie (58) haben, die auf der in Bezug auf die Feststellachse (6) gegenüberliegenden Seite der Welle (2) angeordnet ist, wenn sich die Einheit zum Einspannen und Arretieren in entsicherter Position befindet.

11. Verbindungsvorrichtung nach einem der vorhergehenden Ansprüche, **dadurch gekennzeichnet, dass** sie sich auf eine Lenksäule eines Kraftfahrzeugs bezieht, wobei die Klemme (1) an der genannten Lenksäule angebracht ist und die Welle (2) zum Zahnrad des Lenkgehäuses gehört.

## Claims

1. A device for assembling a bracket (1) with the end of a shaft (2) having an axis (5) and that is inserted in said bracket (1), said assembly device including a system for clamping and immobilizing the shaft (2) in the bracket (1), which system is constituted by a clamping bolt (3) cooperating with a clamping nut (4) along a clamping axis (6), in which device:
- the clamping nut (4) is disposed in one (12) of two branches of said bracket (1);
- the clamping bolt (3) passes through the other branch (11) of the bracket (1);
- the clamping nut (4) is held in place against rotation and translation along the clamping axis (6) by an antirotation elastic member (7) for bearing the clamping nut (4) against the outside face (18) of said branch (12) of the bracket (1), **characterized in that** :
- the outside periphery of the clamping nut (4) is provided with a radial protrusion (9);
- an axial prepositioning abutment (10, 101) is adapted to be fastened to the bracket (1) ;
- so that when the radial protrusion (9) of the clamping nut (4) is pressed against the axial prepositioning abutment (10), said clamping nut (4) is partly withdrawn along its axis (6) to allow the bracket (1) to be engaged over the end of the shaft (2);
- said bearing antirotation elastic member (7) being adapted so that, at the end of tightening the clamping bolt (3) in the clamping nut (4), said clamping bolt (3) neutralizes the antirotation function of the bearing antirotation elastic member (7) in order to allow the clamping nut (4) to escape from the axial prepositioning abutment (10, 101) and immobilize the bracket (1) on the shaft (2).

2. An assembly device according to claim 1, **characterized in that** the axial prepositioning abutment (10) is integrated with the bearing antirotation elastic member (7).

3. An assembly device according to claim 1, **characterized in that** the axial prepositioning abutment (101) is integrated with the bracket (1).

4. An assembly device according to claim 1, **characterized in that** the clamping nut (4) includes:
- a cylindrical body (41) adapted to be mounted in a hole (16) formed in a corresponding branch (12) of the bracket (1);
- a bearing flange (42) against the outside face (18) of said branch (12) of the bracket (1);
- the radial protrusion (9), which is disposed at the periphery of the bearing flange (42), and which is pressed against the axial prepositioning abutment (10) when engaging the bracket (1) over the end of the shaft (2) ;
- an inside cylindrical end (43) which extends said cylindrical body (41) into the housing (22) of the bracket (1) ; said inside cylindrical end (43) being eccentric with respect to said cylindrical body (41) so that said eccentric inside cylindrical end (43) is on the opposite side of the shaft (2) to the clamping axis (6) when the clamping and immobilizing system is in an unlocked position;
- so that at the end of tightening the clamping bolt (3) in the clamping nut (4), and after neutralization of the antirotation function of the bearing antirotation elastic member (7), said clamping nut (4) can turn about the clamping axis (6), and the eccentric inside cylindrical end (43) can be pressed against a flap (26) provided on the shaft (2).

5. An assembly device according toany one of preceding claims, **characterized in that** the bearing antirotation elastic member (7) includes:
- a connecting portion (71) for connecting it to the bracket (1);
- a bearing antirotation portion (72);
- a flexible connecting portion (73) connecting the bearing antirotation portion (72) to the connecting portion (71) to constitute a single member.

6. An assembly device according to claim 5, **characterized in that**:
- the connecting portion (71) of the bearing antirotation elastic member (7) has a U-shaped section with two branches (75, 76) and a connecting base (74) so as to surround the external part of the bracket, each of the two branches (75, 76) having a curved end (77, 78) which is engaged in a housing (13, 14) formed on the corresponding branch (11, 12) of the bracket (1) said connecting base (74) including two bearing elastic tongues (79, 80) which are opposite each other in the axial direction;
- the bearing antirotation portion (72) of the bearing antirotation elastic member (7) includes two bearing antirotation tongues (83, 84) which are connected together by an end base (82);
- the flexible connecting portion (73) of the bearing antirotation elastic member (7) includes two flexible branches (87, 88) which are connected to the connecting base (74) of the connecting portion (71) and to the corresponding bearing antirotation tongue (83, 84).

7. An assembly device according to claim 6, **characterized in that** the axial prepositioning abutment (10) is integrated with the branch (76) of the connecting portion (71) of the bearing antirotation elastic member (7).

8. An assembly device according to claim 6 or 7, **characterized in that** :
- the flange (42) of the clamping nut (4) includes :
. a bearing cylindrical base (44),
. an antirotation portion (45) which is an axial extension of said bearing cylindrical base (44), said antirotation portion (45) includes two flaps (47, 48) : the first flap (47) and the second flap (48) being substantially parallel to each other ;
. an external cylindrical end (46) which axially extends the antirotation portion (45), the transverse overall size of said outside cylindrical end (46) not exceeding the distance between the first flap and the second flap (47, 48),
- so that at rest, i.e. before clamping, the two bearing antirotation tongues (83, 84) of the bearing antirotation portion (72) are pressed against the outside face (51) of the bearing cylindrical base (44) of the flange (42);
- and at the end of clamping the end (35) of the clamping bolt (3) pushes back the end base (82) which entrains the two bearing antirotation tongues (83, 84) in the axial direction to disengage them from the antirotation portion (45).

9. An assembly device according to any one of preceding claims, **characterized in that** the eccentric inside cylindrical end (43) of the clamping nut (4) is provided with a face (54) inclined to the clamping axis (6) to enable insertion of the shaft (2) in a direction parallel to the uprights (11, 12) of the bracket (1).

10. An assembly device according to any one of preceding claims, **characterized in that** the inside cylindrical end (43) of the nut (4) is eccentric to the cylindrical body (41) so that said inside cylindrical end (43) and said cylindrical body (41) have a common generatrix (58) that is disposed on the opposite side of the shaft (2) relative to the clamping axis (6) when the clamping and immobilizing system is in an unlocked position.

11. An assembly device according to any one of preceding claims, **characterized in that** it is applied to a steering column of an automobile vehicle wherein the bracket (1) is mounted on said steering column and the shaft (2) belongs to the gear of the steering box.
